# EUROPEAN PATENT APPLICATION

(11) **EP 1 562 321 A2**
(43) Date of publication of application: **10.08.2005**
(21) Application number: 05100497.6
(22) Date of filing: 26.01.2005
(51) Int. Cl.: H04L 12/00, G04G 13/02

(54) **Network connected clock radio**

(30) Priority: 06.02.2004 US 773384
(71) Applicant: MICROSOFT CORPORATION, Redmond, WA 98052 (US)
(72) Inventor: Marcantonio, John L. c/o Microsoft Corporation, Redmond Washington 98052 (US); Mikhail, Joseph M. c/o Microsoft Corporation, Redmond Washington 98052 (US)
(74) Representative: Grünecker, Kinkeldey, Stockmair & Schwanhäusser Anwaltssozietät

(57) **Abstract**

A clock radio receives over a network, instructions from a remote device that are configured to sound a local alarm on the clock radio. The clock radio may also receive audio alarm data to be used by the clock radio in sounding the alarm. A user can "snooze" the local alarm and have it sounded at a later time, or "stop" the local alarm and initiate streaming and playback of preconfigured audio data from the remote device. The preconfigured audio data can include a range of personalized and public media. The clock radio enables a user to step through audio files within a stream of preconfigured audio data and to step through additional streams of preconfigured audio data available from the remote device.

## Description

### TECHNICAL FIELD

The present disclosure relates to clock radios, and more particularly, to a network-connected clock radio that leverages the power of networked devices and existing network services to provide improved control over clock radio functions and an improved media experience.

### BACKGROUND

Conventional clack radios are stand-alone devices that keep and display time, and provide a user with functions such as a wakeup alarm and access to AM/FM radio broadcasts. Such clock radios operate independently of other devices and offer limited versatility with respect to the functions they provide. For example, the sounds used for a wakeup alarm on a conventional clock radio may be limited to a buzzer option or an AM/FM broadcast option. Although some clock radios provide additional wakeup alarm sounds (e.g., nature sounds, different tones, etc.) they are nevertheless limited to the specific sounds on-board the device, which cannot be updated. In addition, although contemporary clock radio devices may incorporate additional components such as a CD player, the extent of media available through such devices is generally limited to standard AM/FM broadcasts. Therefore, a user's control over media content is limited primarily to the AM/FM broadcast stations that a clock radio is able to receive.

Furthermore, although a clock radio provides a user with control over which AM/FM broadcast stations to play, it cannot provide control over the media content included in such broadcasts. Therefore, users are unable to access any form of personalized media (e.g., personalized music, appointment/calendar information, email), and they are bound to the particular type of media/information being broadcast at the particular time that it is being broadcast. For example, an AM radio station may broadcast news reports on the hour, and traffic and weather reports on each half hour. However, a user just waking up in the morning from a clock radio alarm may desire to have access to such information on a more frequent basis, such as having news every 15 minutes, and traffic and weather every 10 minutes. In addition, some of the information from AM/FM radio broadcasts (particularly traffic reports) may not be relevant to the user's environment, and thus, might be useless. As an example, a traffic report may include information on travel routes that are not relevant for a user, while leaving out information on travel routes that are relevant for the user.

Accordingly, conventional clock radios leave significant room for improvement in areas such as controlling typical clock radio functions and providing relevant media and other useful information to users.

### SUMMARY

A clock radio receives over a network, instructions from a remote device that are configured to sound a local alarm on the clock radio. The clock radio may also receive audio alarm data to be used by the clock radio in sounding the alarm. A user can "snooze" the local alarm and have it sounded at a later time, or "stop" the local alarm and initiate streaming and playback of preconfigured audio data from the remote device. The preconfigured audio data can include a range of personalized and public media. The clock radio enables a user to step through audio files within a stream of preconfigured audio data and to step through additional streams of preconfigured audio data available from the remote device.

A remote device such as a PC on a home network enables a user to control functions of the clock radio and to preconfigure audio data (e.g., into an audio file playlist) to be sent to the clock radio for playback.

### BRIEF DESCRIPTION OF THE DRAWINGS

The same reference numerals are used throughout the drawings to reference like components and features.
Fig. 1 illustrates an exemplary environment suitable for implementing a connected clock radio.
Fig. 2 illustrates a block diagram representation of an exemplary connected clock radio coupled to an exemplary computer over a network.
Fig. 3 illustrates an exemplary connected clock radio display screen and control panel to enable a user to input and receive information.
Fig. 4 illustrates exemplary audio sources that might be available to a user and displayed on display screen when being played back on a connected clock radio.
Fig. 5 illustrates an example of a local connected clock radio function set to an FM station through a local function button of a control panel.
Fig. 6 illustrates exemplary local functions that may be available and displayed on a display screen when active on a connected clock radio.
Fig. 7 illustrates an exemplary component of a connected clock radio user interface.
Fig. 8 illustrates another exemplary component of a connected clock radio user interface.
Fig. 9 illustrates exemplary audio files that may be contained in an audio file playlist.
Figs. 10 and 11 are flow diagrams illustrating exemplary methods for implementing a connected clock radio.
Fig. 12 illustrates an exemplary computing environment suitable for implementing a computer such as that shown in the exemplary environment of Fig. 1.

### DETAILED DESCRIPTION

### Overview

The following discussion is directed to a clock radio that is connectable to a remote device through a network. In the absence of a network connection, the clock radio can function as a conventional stand-alone clock radio device. A network connection permits the clock radio to communicate with a remote device such as a PC in order to leverage the computing power of, and various services accessible by, the remote device.

A remote device is configurable to initiate contact with the clock radio at particular times and to send wakeup alarm instructions for sounding a wakeup alarm along with audio data to be used in sounding the wakeup alarm. The wakeup times can be specific times entered by a user through the remote device user interface, or they can be controlled by an application (e.g., calendar /appointment application, email application, etc.) as specified by a user through the remote device user interface.

A remote device is also configurable to stream preconfigured audio data to the clock radio. Preconfigured audio data can be automatically played by the clock radio as post-alarm audio when a wakeup alarm is turned off. The clock radio includes controls that enable a user to step through audio files within a stream of preconfigured audio data and to access additional streams of preconfigured audio data from the remote device. The remote device enables a user to configure multiple user profiles which control wakeup times, alarm sounds and post-alarm audio data streams.

Advantages of the described clock radio include the ability to leverage powerful remote devices and existing network services to provide improved control over a local alarm for wakeup and other appointment notifications, and to provide a rich media experience through a relatively inexpensive and unintelligent clock radio device.

### Exemplary Environment

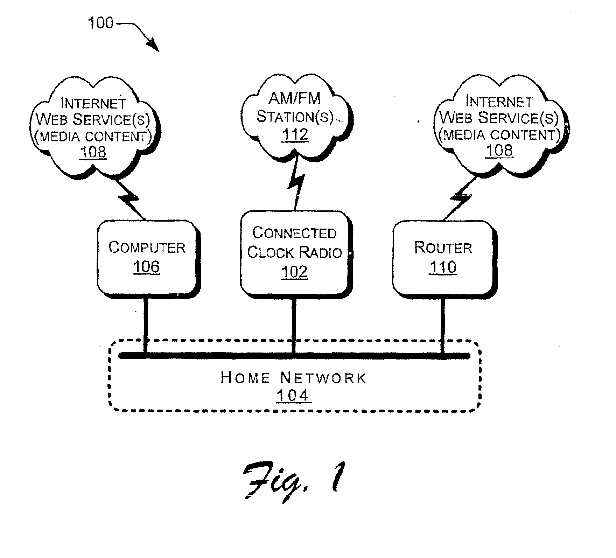

Fig. 1 shows an exemplary environment 100 suitable for implementing a connected clock radio (CCR) 102 using several network connections to different remote devices. The exemplary environment 100 is intended to illustrate examples of some of the ways in which CCR 102 might connect to one or more networks. However, environment 100 is not intended to indicate that the illustrated network connections are all necessary, nor is environment 100 intended to indicate that CCR 102 is limited to the illustrated network connections.

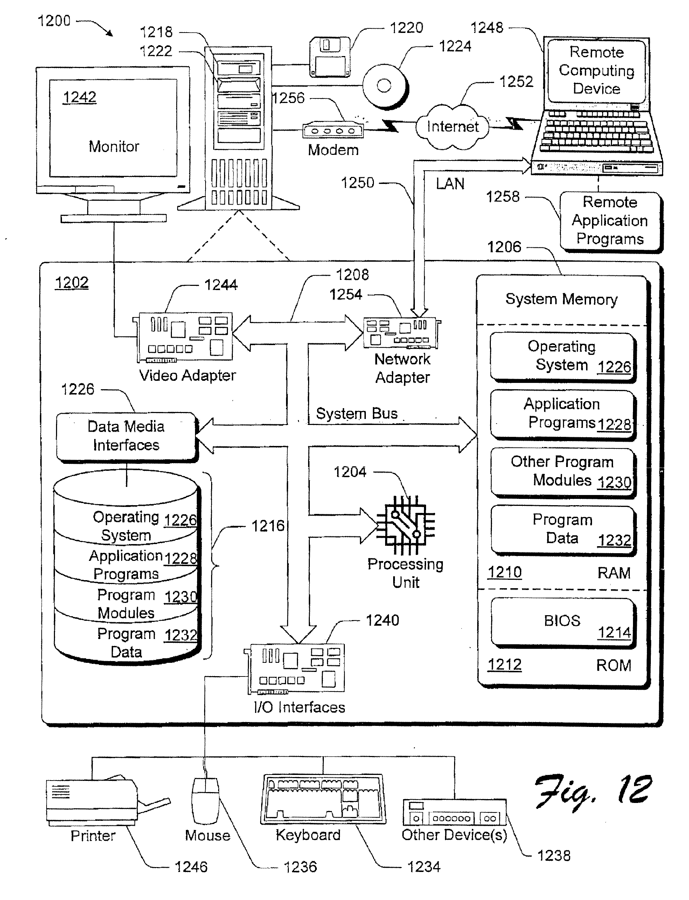

Accordingly, in one implementation, CCR 102 is coupled through a home network 104 to a home computer 106, such as a personal computer (PC). Through computer 106, CCR 102 has access to various media from different Internet Web services 108 and other media content providers. Computer 106 can be implemented as various forms of PC's including, for example, as a desktop PC, a laptop PC, a notebook PC, and so on. There is no intent, however, to limit computer 106 to any particular type of computing device. Thus, in some circumstances computer 106 might also be implemented as other suitable computing devices such as a handheld PDA (personal digital assistant), a server computer, a workstation computer, etc. Certain implementations of computer 106 typically perform common computing functions such as email, calendaring, task organization, word processing, Web browsing, and so on. In the described embodiments, computer 106 runs an open platform operating system, such as the Windows® brand operating systems from Microsoft® . One exemplary implementation of computer 106 is described in more detail below with reference to Fig. 12.

A home network 104 generally provides interconnection between multiple computer devices so that each can share files, programs, printers, other peripheral devices, and Internet access (e.g., through a residential gateway / router) with other computers, reducing the need for redundant equipment. Home network 104 is typically a wireless local area network (WLAN) or Wi-Fi (short for "wireless fidelity") network, to which CCR 102, computer, 106, and other devices are connectable through a wireless (radio) connection. Wi-Fi is specified in the 802.11b specification from the Institute of Electrical and Electronics Engineers (IEEE) and is part of a series of wireless specifications known to those skilled in the art. Although home network 104 is discussed in the context of a wireless network, it is to be understood that there are various types of home networks utilizing both wired connections and wireless connections. Such connections can include, for example, direct cable connections, traditional Ethernet, a phoneline network, an RF (radio frequency) network, and a power line carrier (PLC) connection using the Simple Control Protocol (SCP). SCP is a peer-to-peer, non-IP based home networking protocol that is media independent. SCP allows manufacturers to produce small and intelligent devices (e.g., home appliances) that communicate with each other securely and robustly.

As mentioned above, CCR 102 may access media and services from the Internet (e.g., Web services 108, content providers, etc.) indirectly through home network 104 and computer 106. However, it may also access media and services directly from an Internet Web service 108 or content provider through a router 110 or other Residential Gateway device on home network 104. In this configuration, computer 106 would not be a necessary component for implementing the various functions of CCR 102, since function control and media could be provided by an Internet Web service 108. Furthermore, in addition to receiving standard AM/FM radio broadcasts from AM/FM radio stations 114, CCR 102 may also access various other media and services over standard FM radio bands from FM broadcasters equipped to provide such media and services.

### Exemplary Embodiments

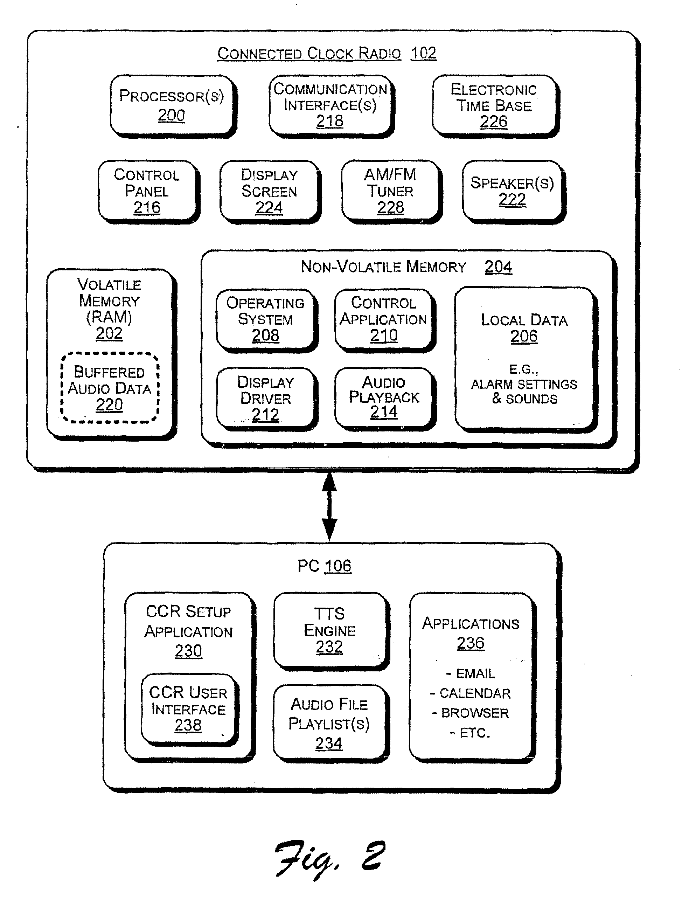

Fig. 2 is a block diagram representation of an exemplary CCR 102 coupled to an exemplary computer 106 over network 104. CCR 102 includes one or more processors 200 (e.g., any of microprocessors, controllers, and the like) that process various instructions to control the operation of CCR 102 and communicate with computer 106. CCR 102 can be implemented with one or more memory components, examples of which include a volatile random access memory (RAM) 202 and non-volatile memory 204 (e.g., any one or more of a read-only memory (ROM), flash memory, EPROM, EEPROM, etc.).

The one or more memory components provide data storage mechanisms to store various information and/or data such as configuration information for CCR 102, local data 206 such as alarm settings and alarm sounds, and any other types of information and data related to operational aspects of CCR 102. Alternative implementations of CCR 102 can include a range of processing and memory capabilities, and may include any number of differing memory components than those illustrated in Fig. 1.

An operating system 208 and one or more application programs or modules can be stored in non-volatile memory 204 and executed on processor(s) 200 to provide a runtime environment. A runtime environment facilitates extensibility of CCR 102 by allowing various interfaces to be defined that, in turn, allow the application programs to interact with CCR 102. In this example, the application programs include a control application 210, a display driver 212, and an audio playback application 214.

Control application 210 processes input commands entered through control panel 216 related to local CCR functions (e.g., time set, alarm set, AM/FM station set). Control application 210 also processes input commands related to communications with a remote device such as computer 106 (e.g., navigating an audio data stream from computer 106). Such commands can be entered through control panel 216 or they can be received from computer 106 through communication interface 218. Control panel 216 is discussed in further detail below with respect to Figs. 3-6.

Communication interface 218 is preferably implemented as a wireless interface, but can also be implemented as any one or more of a serial and/or parallel interface, any type of network interface, and as any other type of communication interface. A wireless communication interface 218 enables CCR 102 to receive control input commands and other information (e.g., audio data) from computer 106 or from another input device such as an Internet Web service 108 via router 106, a remote control device, or from an infrared (IR), 802.11, Bluetooth, or similar RF input device. Communication interface 218 provides a connection between CCR 102 and a home network 104 which allows other electronic and computing devices coupled to the home network 104 to send commands and other information to CCR 102.

Audio playback application 214 processes audio data in various formats including streaming audio data received from computer 106 via home network 104. Audio playback application 214 processes audio data according to input commands executed by control application 210 on processor 200. The term "streaming" is generally used to indicate that audio data is provided over a network (e.g., home network 104, the Internet, etc.) to CCR 102 by a remote computing device (e.g., computer 106, a Web server providing Web services 108, AM/FM broadcast stations 112), and that CCR 102 renders the streaming audio data as it is received from the remote device, rather than waiting for an entire content "file" to be delivered. Accordingly, streaming audio data is typically stored on CCR 102 to the extent that it is buffered to provide, for example, 5 to 10 seconds of playback time in the event that an incoming stream of audio data is temporarily interrupted. Thus, during playback of an audio data stream, there is usually 5 to 10 seconds of buffered audio data 218 stored in volatile memory 202.

Audio playback application 214 is capable of processing and playing back audio data in various audio data formats. Audio playback application 214 processes audio data through a series of steps that include reading data (i.e., reading an audio data file such as an MP3 file or WMA file) from a data stream, decoding the data, and rendering the data for presentation (e.g., through an audio speaker 222). Each of the steps is performed by a software component called a "filter". Thus, audio playback application 214 comprises a "filter graph" that includes one or more chains of filters. Such filter graphs are generally well-known to those skilled in the art and therefore will not be described in further detail with respect to audio playback application 214.

Display driver 212 drives the CCR display screen 224 to display the current time, which is kept by electronic time base 226. An electronic time base 226 is well-known to those skilled in the art and generally includes a 60 hertz source (e.g., 60-Hz oscillations from a normal power line or a crystal oscillator) and a divide down counter to generate a 1 hertz signal used to keep time. Display driver 212 also drives display screen 224 to display other information related to various functions of CCR 102, such as which local function of CCR 102 is currently active or which audio source is currently being processed through audio playback application 214 or AM/FM tuner 228.

Fig. 3 illustrates an exemplary CCR 102 as it might appear to enable a user to input and receive information. CCR 102 includes control panel 216 and display screen 224. It is to be understood that the description and illustrations provided herein of CCR 102 and its various components, including control panel 216 and display screen 224, are by way of example only and not of limitation. Therefore, although certain characteristics and components of control panel 216 and display screen 244 are specifically described and illustrated, it will be clear to those skilled in the art that many other implementations of a control panel, a display screen, and other components of CCR 102 are possible to achieve the same or similar purposes as those conveyed by the specific examples presented herein.

Control panel 216 has various control buttons or switches that are used to control local CCR functions (e.g., time set, alarm set, AM/FM station set) and the navigation and playback of audio data streaming from a remote source such as computer 106. The various control buttons may include, for example, a "Volume" button, an "Audio Source" button, a skip "Back" button, a "Stop/Resume" button, a skip "Forward" button, a "Local Function" button, and a "Snooze" button. The control buttons may provide different control features depending on the particular function that is active on CCR 102. For example, when the alarm is activated, pressing the "Stop/Resume" button will turn off the alarm. Pressing the "Stop/Resume" button will also, however, alternately stop and resume the playback of a current audio source being played on the CCR 102.

Display screen 224 displays information including the current time, the audio source that is currently playing, if any, and the local function that is currently activated, if any. The display screen 224 of Fig. 3 indicates that there in no local function currently activated, and that an audio source is playing from the number 3 audio data stream, which is one of a number of audio streams that are available to the user. The audio source on display screen 224 of Fig. 3 also indicates that the number 3 audio data stream is a music source and that it is made up of an audio file playlist of tunes entitled "MusicMix1". The "Back" and "Forward" buttons on control panel 216 allow a user to navigate backwards and forwards through the audio file playlist of tunes available from the current audio source, which is entitled "MusicMix1" in this example. The "Stop/Resume" button on control panel 216 can be depressed by a user to alternately stop and resume playback of the current audio source.

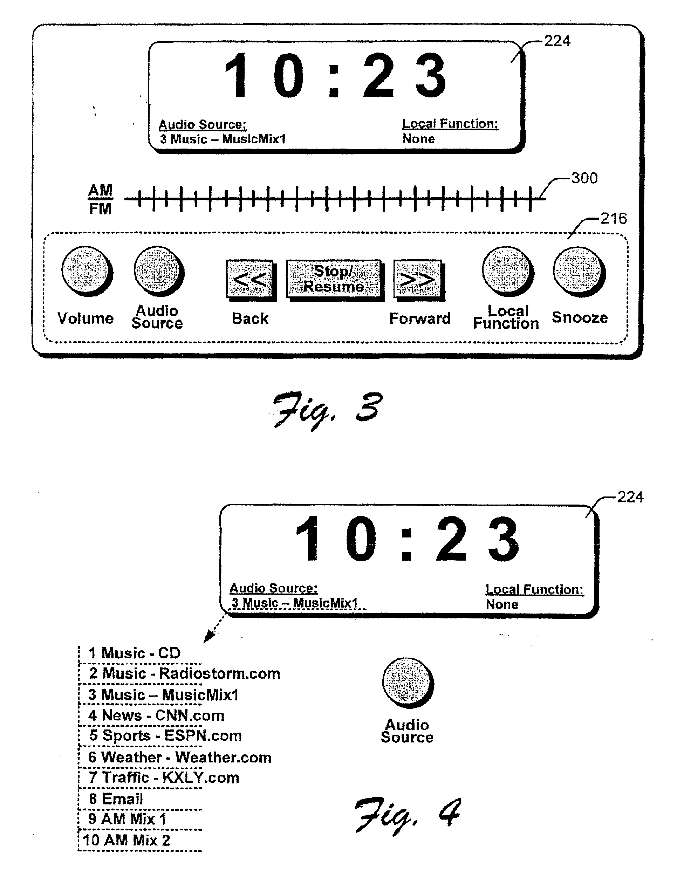

Fig. 4 illustrates additional examples of the types of audio, sources that might be available to a user and displayed on display screen 224 when being played back on CCR 102. The "Audio Source" button illustrated in Fig. 4 is intended to indicate that a user can step through the available audio data sources by depressing the audio source button. An audio source is a preconfigured audio file playlist that is streamed to CCR 102 from a remote device such as computer 106. In the current example, there are 10 available audio sources that the user can access through the audio source button. As a user steps through the available audio sources, the information about the name and type of the audio source, as shown in Fig. 4, will be displayed on display screen 224 as each audio source becomes the current audio source. Preconfigured audio file playlists generated on a remote device such as computer 106 and streamed to CCR 102 as audio sources are discussed in greater detail below. The number and types of audio data sources available at CCR 102 can be preconfigured on the computer 106.

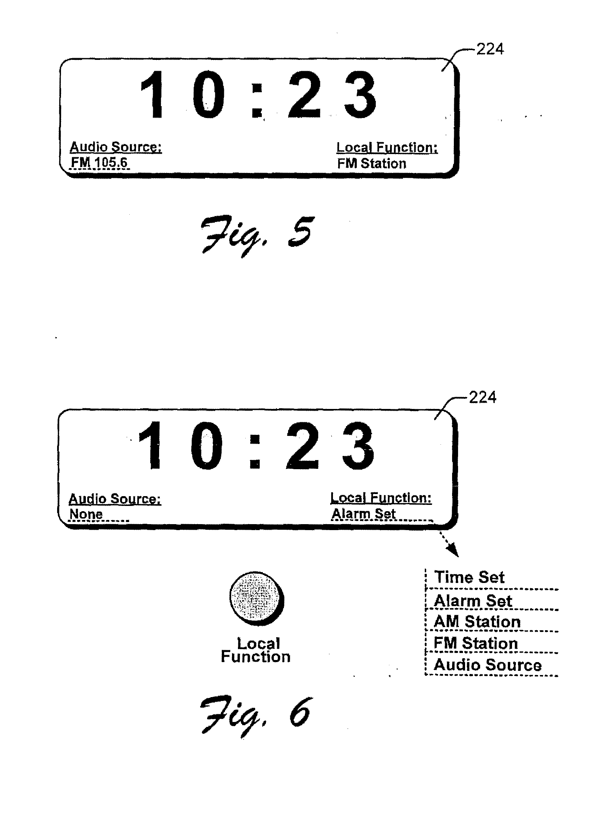

Fig. 5 illustrates an example where the local function has been set to "FM Station" through the "Local Function" button of control panel 216. The display screen 224 shows that the "FM station" local function is active, and that the current audio source is the FM station, "FM 105.6". The "Back" and "Forward" buttons on control panel 216 allow a user to navigate down and up on the AM/FM radio line 300 (Fig. 3) to change the FM station that is being played and displayed as the current audio source. As mentioned above, the "Stop/Resume" button on control panel 216 can be depressed by a user to alternately stop and resume playback of the current audio source.

Fig. 6 illustrates additional examples of the types of local functions that might be available to a user and displayed on display screen 224 when they are active on CCR 102. The "Local Function" button illustrated in Fig. 6 is intended to indicate that a user can step through the available local functions by depressing the local function button. In the current example, there are 5 available local functions that the user can access through the local function button. The available local functions are a Time Set function, an Alarm Set function, an AM Station set function, an FM Station set function, and an Audio Source function. As a user steps through the available local functions, the current local function will be displayed on display screen 224 as indicated in Fig. 6. In addition, the "Back" and "Forward" buttons on control panel 216 allow a user to navigate and control the currently active local function. For example, if the active local function is "Alarm Set", as shown in Fig. 6, the "Back" and "Forward" buttons will permit the user to move the time for setting an alarm backwards or forwards. If the active local function is "Audio Source", the "Back" and "Forward" buttons will permit the user to navigate audio files in a current audio source streaming from computer 106.

Referring again to Fig. 2, components of an exemplary computer 106 will now be described. It is understood that various components of the exemplary computer 106, such as processing components, memory components, and executable components, are not illustrated in Fig. 2. For purposes of ease of discussion, such components will not be specifically discussed with reference to Fig. 2. However, the operation of such components is well-known to those skilled in the art, and a more detailed description of such components is provided with reference to an exemplary implementation of computer 106 shown in Fig. 12.

As shown in Fig. 2, computer 106 includes a CCR (connected clock radio) setup application 230, a TTS (text-to-speech) conversion engine 232, one or more audio file playlists 234, and various application programs 236. CCR setup application 230 controls communications with CCR 102, including sending periodic time synchronization data to CCR 102 to adjust the time being kept by electronic time base 226 and displayed on CCR display screen 224. CCR setup application 230 includes a module to generate and support a CCR user interface 238 for display on a display screen (not shown in Fig. 2) of computer 106. The CCR user interface 238 enables a user to setup various functions of CCR 102 (e.g., alarm times) and to preconfigure audio data sources in the form of audio file playlists 234 for subsequent streaming to, and playback on, CCR 102.

Audio file playlists 234 represent various types of audio data preconfigured and generated through CCR setup application 230 and TTS engine 232. CCR setup application 230 executing on computer 106 manages the streaming of audio data from playlists 234 to CCR 102 for playback on CCR 102. CCR setup application 230 enables a user to preconfigure audio playlists by entering instructions through the CCR user interface 238 regarding the types and locations of various media the user wants to include in playlists 234. Thus, playlists 234 are customized lists of content that contain audio files (or point to audio files) specified by a user for playback on a CCR 102. Organizing audio content by playlists enables the user to group various audio content together to be played in any order specified by the user. For example, a user can define a playlist that includes a digest of stories from a news-oriented Web site, emails from an email inbox, appointments from a calendar, and so on.

CCR setup application 230 communicates with various application programs 236, such as a Web browser and an email application, to retrieve various audio and text-based media content identified by a user through the CCR user interface 238. An example of retrieving such content would be the CCR setup application 230 contacting a Web browser application 236 and instructing it to visit a particular news-oriented Internet Web site/service 108 periodically (e.g., at some preset time prior to an alarm wakeup time) to retrieve a digest of text-based news stories according to a user's specific desires. Another example would be the CCR setup application 230 accessing the "My Music" folder on computer 106 to retrieve one or more music files (e.g., WMA or MP3 files) specified by a user. Still another example would be the CCR setup application 230 accessing an email application 236 and instructing it to retrieve and forward certain emails (e.g., all new emails, all "urgent" emails, all emails from a particular person, etc.) specified by a user through CCR user interface 238.

The preparation of retrieved content involves building or generating audio file playlists 234 from the retrieved data. Audio file playlists 234 include audio files retrieved in various audio formats by computer 106. Audio file playlists 234 might also include audio files generated from content originally retrieved as text-based content (e.g., text-based news stories, emails, etc.) which is then subsequently converted to audio content by TTS engine 232. After text content is converted into audio files, audio file playlists 234 will generally have the same format, or at least a format that is understood by the audio playback application 214 on CCR 102. The format of audio file playlists 234 provides a consistent playback experience at CCR 102 for a user.

TTS engine 232 operates in a manner similar to a TTS converter that may be commonly available as part of an operating system. Conventional TTS converters recognize text and audiblize the text as spoken words using a synthesized voice chosen from several pre-generated voices. Although TTS converters are typically installed with an operating system such as the Windows® brand operating systems from Microsoft® , such converters are also available through third party manufacturers. TTS converters can provide different voices allowing for regional accents such as British English, or they can also speak a different language altogether such as German, French or Russian. In a manner similar to such TTS converters, TTS engine 232 recognizes text segments within text files (e.g., email files from an email application 236, news files from a news-oriented Internet Web service 108, etc.), converts the text segments into synthesized voice data, and stores the synthesized voice data as audio files. Thus, text files can be retrieved by CCR setup application 230, converted into one or more audio files by TTS engine 232, and included in playlists 234 according to a user's instructions entered through CCR user interface 238.

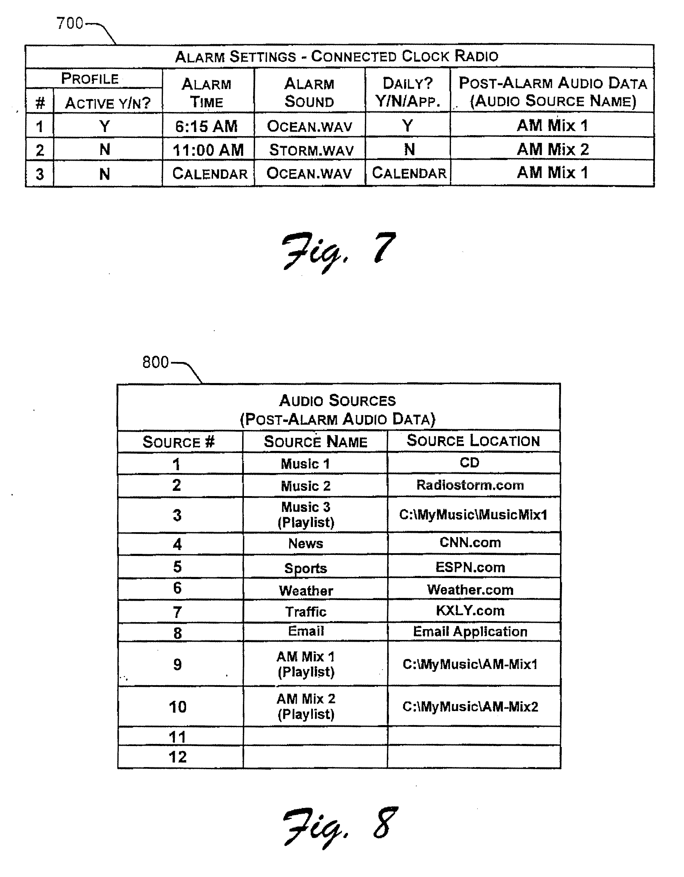

Figs. 7-10 illustrate various possible representations of the CCR user interface 238 that show examples of the types of information a user might enter on a computer 106 through CCR setup application 230 in order to set up various functions of CCR 102 and preconfigure audio data for subsequent playback on CCR 102. It is noted that the representations of the CCR user interface 238 in Figs. 7-10 and related discussion are provided by way of example only and not by way of limitation. The exemplary representations of CCR user interface 238 are intended to provide a general idea of the types of information that may be useful in enabling the functions and playback of audio data on CCR 102 through a remote device executing a control application such as CCR setup application 230. One skilled in the art will recognize that the substance and form of such a user interface may be virtually limitless.

Fig. 7 illustrates an exemplary component of the CCR user interface 238 that may be suitable for entering alarm setting information into CCR setup application 230 for a CCR 102. The user interface component is illustrated as an "Alarm Settings" table 700. The exemplary CCR user interface 238 table 700 permits a user to enter in a number of different alarm settings profiles. Although any number of profiles might be possible, three profiles are shown in the exemplary table 700. Providing different alarm profiles might be useful, for example, to a user who has varying schedules, or in the case where there are 2 users sharing the same CCR device 102. A user can further enter information indicating which profiles are active. An active profile (i.e., indicated with a "Y", for Yes) is a profile that the CCR setup application 230 will implement by communicating the appropriate data to CCR 102 at the appropriate alarm time.

Alarm times for each user profile can be entered as specific times by the user, or they can be determined by an application program and retrieved from the application program by the CCR setup application 230. In the example alarm settings of table 700, the alarm time for profile #3 is to be controlled by a Calendar application, while the alarm times for profiles #1 and #2 have been specifically entered by the user. A user can also indicate an alarm sound to be played on CCR 102 at the time the alarm is activated. The alarm sounds may be stored as audio files (eg., .WAV files, etc.) in a particular memory folder location on computer 106, for example, and sent to CCR 102 before or at the time of the alarm time. In the Fig. 7 example, table 700 indicates that profiles #1 and #3 are using an "ocean" alarm sound, while profile #2 is using a "storm" alarm sound.

Additional information that might be useful in controlling the alarm on CCR 102 may include an indication about whether the alarm is to recur on a daily basis (or on some other recurring basis), as indicated in table 700. In the example alarm settings of table 700, profile #1 indicates that the alarm is to recur on a daily basis, while profile #2 indicates the alarm is not to occur on a daily basis. The recurrence of the alarm for profile #3 is to be controlled by a Calendar application.

The CCR setup application 230 also permits a user to experience preconfigured audio data after an alarm has been sounded (i.e., as "Post-Alarm Audio Data") or at other times (e.g., by selecting "Audio Source" as a "Local Function" as shown in Fig. 6). In the example alarm settings of table 700, profiles #1 and #3 indicate that the desired Post-Alarm Audio Data is a playlist entitled "AM Mix 1", while profile #2 indicates that the desired Post-Alarm Audio Data is a playlist entitled "AM Mix 2".

Fig. 8 illustrates an exemplary component of the CCR user interface 238 that may be suitable for entering information into CCR setup application 230 in order to preconfigure audio data for playback on a CCR 102. Thus, the "Post-Alarm Audio Data" selections that a user enters into the example alarm settings of table 700 of Fig. 7, can be preconfigured in the Audio Sources table 800 of Fig. 8. Table 800 indicates that a user has preconfigured 10 different audio sources. The table 800 extends the audio source numbers (i.e., Source #) beyond 10 in order to indicate that any number of audio sources may be preconfigured, and that the illustration of 10 audio sources is intended as an example number of audio sources and not as a limitation of the number of possible audio sources.

Various audio sources of table 800 are configured as being from a particular content provider or "Source Location", such as sources "Music 1" and "Music 2". "Music 1" provides an audio source that comes from a CD drive that is a component of computer 106. Thus, a user can configure alarm settings and post-alarm audio data through the CCR user interface 238 via exemplary tables 700 and 800 such that audio data from peripheral devices of computer 106 are accessible through CCR 102. "Music 2" provides audio data directly from a particular content provider such as an Internet Web Service 108 that is accessible through computer 106. Therefore, a user can configure alarm settings and post-alarm audio data through the CCR user interface 238 such that audio data from an Internet Web Service 108 or other networked content provider is accessible through CCR 102. Such access to content from an Internet Web Service 108 may be indirect access through a computer 106, or it may be more direct access through a router 110 or other Residential Gateway device on a home network 104.

Other audio sources of table 800 may be configured as being from a text-based content provider or "Source Location". For example, a News source such as CNN.com may provide news reports in an audio file format that could be played directly by CCR 102. However, a News source might also provide text-based news reports, in which case a TTS engine 232 on computer 106 would convert the reports into an audio format prior to streaming the reports to CCR 102 for playback. An Email audio source is another example of a text-based content provider that can be used as an audio source after conversion of the text data into audio data. Source #8 of table 800 is an Email source whose location is an Email application executing on computer 106 or on some other remote device accessible by CCR 102.

Still other audio sources of table 800 may be a combination of various types of sources as discussed above. A combination of various types of sources can be made through the use of audio file playlists (i.e., audio file playlists 234 as shown in Fig. 2), such as the "Music 3", "AM Mix 1", and "AM Mix 2" playlists in table 800. Source #3 of table 800 is the "Music 3" playlist which is located on computer 106 at "C:\MyMusic\MusicMix1". Source #9 is the "AM Mix 1" playlist which is located on computer 106 at "C:\MyMusic\AM-Mix1". Audio file playlists 234 can include audio files that contain content from a wide variety of media, including, for example, email content, calendar appointment content, music content, news report content, and so on.

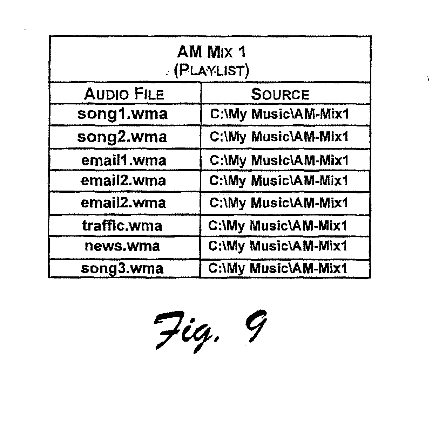

Fig. 9 illustrates an example of the types of audio files that may be contained in an audio file playlist 234, such as "AM Mix 1". The audio files include music content in an original audio format as well as email, news report, and traffic report content that is originally in a text-based format which has been converted into an audio format by TTS engine 232. Thus, a user can configure alarm settings and post-alarm audio data through the CCR user interface 238 via exemplary tables 700 and 800 such that audio data from a wide variety of sources can be made accessible through audio file playlists 234 on CCR 102.

### Exemplary Methods

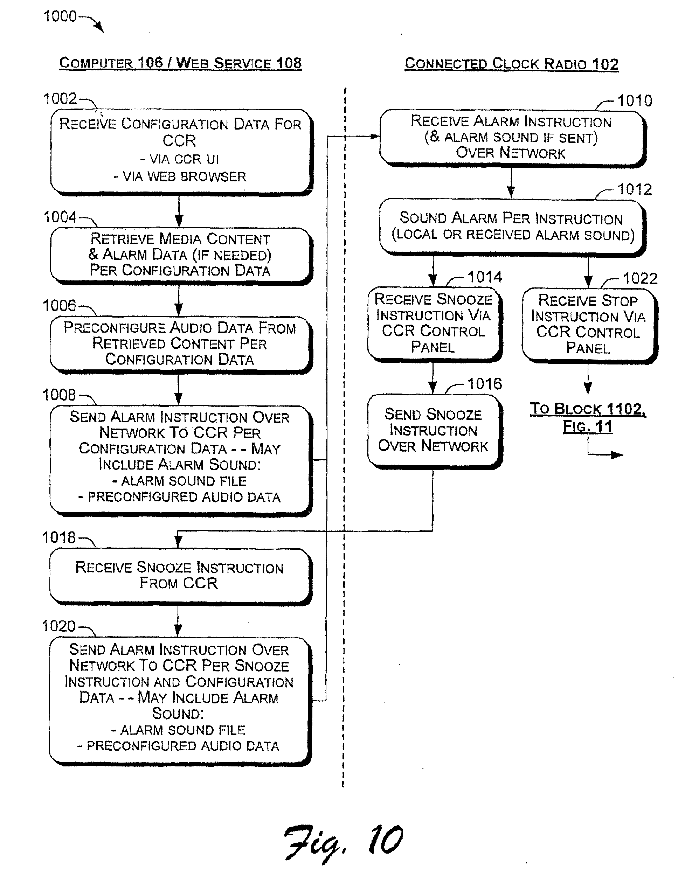

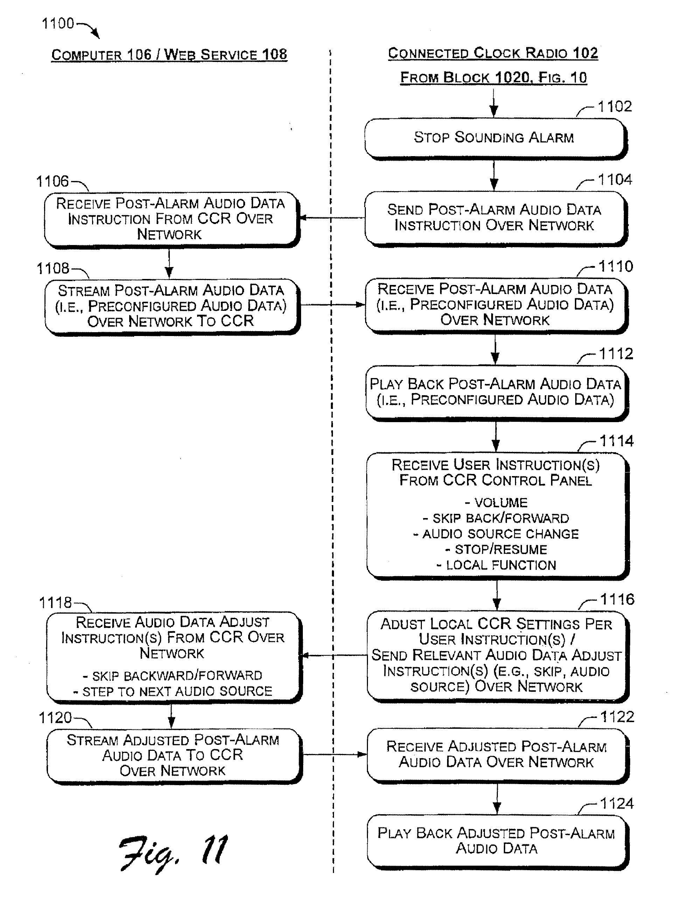

Example methods for implementing a connected clock radio (CCR) 102 will now be described with primary reference to the flow diagrams of Figs. 10 and 11. The methods apply to the exemplary embodiments discussed above with respect to Figs. 1-9. While one or more methods are disclosed by means of flow diagrams and text associated with the blocks of the flow diagrams, it is to be understood that the elements of the described methods do not necessarily have to be performed in the order in which they are presented, and that alternative orders may result in similar advantages. Furthermore, the methods are not exclusive and can be performed alone or in combination with one another. The elements of the described methods may be performed by any appropriate means including, for example, by hardware logic blocks on an ASIC or by the execution of processor-readable instructions defined on a processor-readable medium.

A "processor-readable medium," as used herein, can be any means that can contain, store, communicate, propagate, or transport instructions for use or execution by a processor. A processor-readable medium can be, without limitation, an electronic, magnetic, optical, electromagnetic, infrared, or semiconductor system, apparatus, device, or propagation medium. More specific examples of a processor-readable medium include, among others, an electrical connection (electronic) having one or more wires, a portable computer diskette (magnetic), a random access memory (RAM) (magnetic), a read-only memory (ROM) (magnetic), an erasable programmable-read-only memory (EPROM or Flash memory), an optical fiber (optical), a rewritable compact disc (CD-RW) (optical), and a portable compact disc read-only memory (CDROM) (optical).

At block 1002 of method 1000, a remote computing device such as computer 106 receives configuration data for setting up a CCR 102. The configuration data can be entered into computer 106, for example, through a CCR user interface 238 supported by a CCR setup application. At block 1004, computer 106 retrieves media content that is identified by the configuration data. Identified media content can include various types of audio data including audio music files and audio speech files from various local (e.g., on or coupled to computer 106) and remote (e.g., an Internet Web service) sources. Identified media content can also include various types of text-based content such as email, calendaring information, news reports, weather reports, traffic reports, and the like.

At block 1006, retrieved media content is preconfigured as audio data according to the configuration data. Preconfiguration can include gathering audio files and text-based content, converting the text-based content into audio data files and generating audio file playlists from all of the audio files according to user instructions from the configuration data. At block 1008, an alarm instruction is sent to CCR 102 over a network (e.g., home network 104) according to user instructions in the configuration data. An alarm sound file may also be sent to CCR 102 to be played on CCR to sound the alarm. In addition, the preconfigured audio data could be sent (i.e., streamed) to CCR to be used as the alarm sound.

At block 1010, the clock radio 102 receives the alarm instruction and any other data sent from computer 106 over the network 104. At block 1012, CCR 102 sounds the alarm according to the alarm instruction. The alarm sound can be based on a locally stored alarm sound, or on an alarm sound received from computer 106. At block 1014, CCR 102 receives a snooze instruction from the control panel 216 of the CCR. The snooze instruction is entered by a user at CCR 102 who desires to have the alarm turn off but sound again at some later time. At block 1016, the snooze instruction is sent to computer 106, where it instructs the computer 106 to send the alarm instruction again at a later time. At block 1018, the computer 106 receives the snooze instruction, and at block 1020, it sends the alarm instruction again to CCR 102 over network 104.

At block 1022, after the alarm has sounded on CCR 102, CCR 102 can also receive a "stop" instruction from the CCR control panel 216. The method continues from block 1022 with method 1100 on Fig. 11, where, at block 1102 the CCR 102 stops sounding the alarm in response to the stop instruction. At block 1104, CCR 102 sends a post-alarm audio data instruction to the computer 106. At block 1106, computer 106 receives the post-alarm instruction and begins streaming a first audio source of post-alarm audio data (i.e., one of a number of available streaming sources of preconfigured audio data) as shown at block 1108.

At block 1110, CCR 102 receives the post-alarm audio data over the network and begins playing back the audio data as shown at block 1112. During playback, CCR 102 can receive any number of user instructions entered via the CCR control panel 216 as shown at block 1114. Such instructions may include, for example, a volume instruction, a skip backward or forward instruction, an audio source change instruction, a stop or resume instruction, and a local function change instruction. At block 1116, local CCR settings (e.g., volume, local functions) are adjusted according to the user instructions, and relevant user instructions such as skip instructions and audio source change instructions are sent to computer 106 in order to adjust the streaming post-alarm audio data.

At block 1118, computer 106 receives the relevant audio data instructions from CR 102 and streams adjusted post-alarm audio data to CCR 102 as shown at block 1120. Depending on the audio data instruction, adjusting the audio data can include streaming the first audio source of the post-alarm audio data (i.e., preconfigured audio data) starting at an audio file that is previous to a currently streaming audio file within the first audio source. Likewise, adjusting the audio data may include streaming the first audio source of post-alarm audio data (i.e., preconfigured audio data) beginning at an audio file that is subsequent to a currently streaming audio file within the first audio source. Adjusting the audio data may also include halting the streaming of the first source, stepping to a next audio source of post-alarm audio data (i.e., preconfigured audio data), and streaming the next audio source to CCR 102.

At block 1122, CCR 102 receives the adjusted post-alarm audio data (i.e., preconfigured audio data) over network 104 and plays it back as shown at block 1124.

### Exemplary Computer

Fig. 12 illustrates an exemplary computing environment suitable for implementing a computer 106 such as that discussed above with reference to Figs. 1-11. Although one specific configuration is shown in Fig. 12, computer 106 may be implemented in other computing configurations.

The computing environment 1200 includes a general-purpose computing system in the form of a computer 1202. The components of computer 1202 may include, but are not limited to, one or more processors or processing units 1204, a system memory 1206, and a system bus 1208 that couples various system components including the processor 1204 to the system memory 1206.

The system bus 1208 represents one or more of any of several types of bus structures, including a memory bus or memory controller, a peripheral bus, an accelerated graphics port, and a processor or local bus using any of a variety of bus architectures. An example of a system bus 1208 would be a Peripheral Component Interconnects (PCI) bus, also known as a Mezzanine bus.

Computer 1202 includes a variety of computer-readable media. Such media can be any available media that is accessible by computer 1202 and includes both volatile and non-volatile media, removable and non-removable media. The system memory 1206 includes computer readable media in the form of volatile memory, such as random access memory (RAM) 1210, and/or non-volatile memory, such as read only memory (ROM) 1212. A basic input/output system (BIOS) 1214, containing the basic routines that help to transfer information between elements within computer 1202, such as during start-up, is stored in ROM 1212. RAM 1210 contains data and/or program modules that are immediately accessible to and/or presently operated on by the processing unit 1204.

Computer 1202 may also include other removable/non-removable, volatile/non-volatile computer storage media. By way of example, Fig. 12 illustrates a hard disk drive 1216 for reading from and writing to a non-removable, non-volatile magnetic media (not shown), a magnetic disk drive 1218 for reading from and writing to a removable, non-volatile magnetic disk 1220 (e.g., a "floppy disk"), and an optical disk drive 1222 for reading from and/or writing to a removable, non-volatile optical disk 1224 such as a CD-ROM, DVD-ROM, or other optical media. The hard disk drive 1216, magnetic disk drive 1218, and optical disk drive 1222 are each connected to the system bus 1208 by one or more data media interfaces 1226. Alternatively, the hard disk drive 1216, magnetic disk drive 1218, and optical disk drive 1222 may be connected to the system bus 1208 by a SCSI interface (not shown).

The disk drives and their associated computer-readable media provide non-volatile storage of computer readable instructions, data structures, program modules, and other data for computer 1202. Although the example illustrates a hard disk 1216, a removable magnetic disk 1220, and a removable optical disk 1224, it is to be appreciated that other types of computer readable media which can store data that is accessible by a computer, such as magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like, can also be utilized to implement the exemplary computing system and environment.

Any number of program modules can be stored on the hard disk 1216, magnetic disk 1220, optical disk 1224, ROM 1212, and/or RAM 1210, including by way of example, an operating system 1226, one or more application programs 1228, other program modules 1230, and program data 1232. Each of such operating system 1226, one or more application programs 1228, other program modules 1230, and program data 1232 (or some combination thereof) may include an embodiment of a caching scheme for user network access information.

Computer 1202 can include a variety of computer/processor readable media identified as communication media. Communication media embodies computer readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also included within the scope of computer readable media.

A user can enter commands and information into computer system 1202 via input devices such as a keyboard 1234 and a pointing device 1236 (e.g., a "mouse"). Other input devices 1238 (not shown specifically) may include a microphone, joystick, game pad, satellite dish, serial port, scanner, and/or the like. These and other input devices are connected to the processing unit 1204 via input/output interfaces 1240 that are coupled to the system bus 1208, but may be connected by other interface and bus structures, such as a parallel port, game port, or a universal serial bus (USB).

A monitor 1242 or other type of display device may also be connected to the system bus 1208 via an interface, such as a video adapter 1244. In addition to the monitor 1242, other output peripheral devices may include components such as speakers (not shown) and a printer 1246 which can be connected to computer 1202 via the input/output interfaces 1240.

Computer 1202 may operate in a networked environment using logical connections to one or more remote computers, such as a remote computing device 1248. By way of example, the remote computing device 1248 can be a personal computer, portable computer, a server, a router, a network computer, a peer device or other common network node, and the like. The remote computing device 1248 is illustrated as a portable computer that may include many or all of the elements and features described herein relative to computer system 1202.

Logical connections between computer 1202 and the remote computer 1248 are depicted as a local area network (LAN) 1250 and a general wide area network (WAN) 1252. Such networking environments are commonplace in offices, enterprise-wide computer networks, intranets, and the Internet. When implemented in a LAN networking environment, the computer 1202 is connected to a local network 1250 via a network interface or adapter 1254. When implemented in a WAN networking environment, the computer 1202 includes a modem 1256 or other means for establishing communications over the wide network 1252. The modem 1256, which can be internal or external to computer 1202, can be connected to the system bus 1208 via the input/output interfaces 1240 or other appropriate mechanisms. It is to be appreciated that the illustrated network connections are exemplary and that other means of establishing communication link(s) between the computers 1202 and 1248 can be employed.

In a networked environment, such as that illustrated with computing environment 1200, program modules depicted relative to the computer 1202, or portions thereof, may be stored in a remote memory storage device. By way of example, remote application programs 1258 reside on a memory device of remote computer 1248. For purposes of illustration, application programs and other executable program components, such as the operating system, are illustrated herein as discrete blocks, although it is recognized that such programs and components reside at various times in different storage components of the computer system 1202, and are executed by the data processor(s) of the computer.

### Conclusion

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A processor-readable medium comprising processor-executable instructions configured for:
receiving configuration data for a clock radio;
retrieving media content identified by the configuration data;
preconfiguring audio data from the media content into one or more audio sources; and
sending an alarm instruction over a network to the clock radio, the alarm instruction configured to sound an alarm on the clock radio at an alarm time identified by the configuration data.

2. A processor-readable medium as recited in claim 1, comprising further processor-executable instructions configured for:
sending an alarm audio file over the network to the clock radio, the alarm instruction further configured to sound the alarm on the clock radio by causing the clock radio to play the alarm audio file.

3. A processor-readable medium as recited in claim 1, comprising further processor-executable instructions configured for:
receiving a post-alarm audio data instruction from the clock radio; and
streaming a first audio source of preconfigured audio data to the clock radio over the network in response to the post-alarm audio data instruction.

4. A processor-readable medium as recited in claim 3, comprising further processor-executable instructions configured for:
receiving an audio data adjustment instruction from the clock radio; and
adjusting the first audio source of preconfigured audio data in response to the audio data adjustment instruction.

5. A processor-readable medium as recited in claim 4, wherein the audio data adjustment instruction is a skip back instruction and the adjusting comprises streaming the first audio source of preconfigured audio data beginning at an audio file that is previous to a currently streaming audio file within the first audio source.

6. A processor-readable medium as recited in claim 4, wherein the audio data adjustment instruction is a skip forward instruction and the adjusting comprises streaming the first audio source of preconfigured audio data beginning at an audio file that is subsequent to a currently streaming audio file within the first audio source.

7. A processor-readable medium as recited in claim 4, wherein the audio data adjustment instruction is to step to a next audio source of preconfigured audio data, and the adjusting comprises:
halting the streaming of the first source; and
streaming a second source of preconfigured audio data to the clock radio over the network.

8. A processor-readable medium as recited in claim 1, comprising further processor-executable instructions configured for:
receiving a snooze instruction from the clock radio; and
sending the alarm instruction over the network to the clock radio at a later time in accordance with the snooze instruction.

9. A processor-readable medium as recited in claim 1, wherein the retrieving media content comprises retrieving media content from the group comprising:
audio formatted content; and
text-based content.

10. A processor-readable medium as recited in claim 9, wherein the text-based content is selected from the group comprising:
text-based email;
text-based calendar appointments;
text-based news reports;
text-based weather reports;
text-based traffic reports; and
text-based stock reports.

11. A processor-readable medium as recited in claim 1, wherein the preconfiguring audio data comprises converting text-based data into audio formatted data.

12. A processor-readable medium as recited in claim 1, wherein the preconfiguring audio data comprises generating audio file playlists to be used as audio sources.

13. A processor-readable medium comprising processor-executable instructions configured for:
receiving an alarm instruction from a remote device over a network, the alarm instruction configured to sound a local alarm;
receiving audio alarm data from the remote device over the network; and
sounding the local alarm by playing the audio alarm data.

14. A processor-readable medium as recited in claim 13, comprising further processor-executable instructions configured for:
receiving a stop instruction from a local control panel, the stop instruction configured to stop the sounding of the local alarm; and
sending a post-alarm audio data instruction to the remote device over the network, the post-alarm audio data instruction configured to cause the remote device to stream a first audio source of preconfigured audio data over the network.

15. A processor-readable medium as recited in claim 14, comprising further processor-executable instructions configured for:
receiving the first audio source of preconfigured audio data from the remote device over the network; and
playing the first audio source of preconfigured audio data.

16. A processor-readable medium as recited in claim 15, comprising further processor-executable instructions configured for:
receiving a skip forward instruction from the local control panel; and
sending the skip forward instruction to the remote device over the network, the skip forward instruction configured to cause the remote device to skip to a next audio file in the first audio source of preconfigured audio data.

17. A processor-readable medium as recited in claim 15, comprising further processor-executable instructions configured for:
receiving a skip back instruction from the local control panel; and
sending the skip back instruction to the remote device over the network, the skip back instruction configured to cause the remote device to skip to a previous audio file in the first audio source of preconfigured audio data.

18. A processor-readable medium as recited in claim 15, comprising further processor-executable instructions configured for:
receiving an audio source instruction from the local control panel; and
sending the audio source instruction to the remote device over the network, the audio source instruction configured to cause the remote device to halt the streaming of the first audio source and to stream a second audio source of preconfigured audio data.

19. A processor-readable medium as recited in claim 15, comprising further processor-executable instructions configured for:
receiving a snooze instruction from the local control panel;
sending the snooze instruction to the remote device over the network;
receiving the audio alarm data from the remote device over the network at a later time according to the snooze instruction; and
sounding the local alarm at the later time.

20. A processor-readable medium as recited in claim 15, comprising further processor-executable instructions configured for:
receiving a local function instruction from the local control panel; and
changing a local function according to the local function instruction.

21. A computer comprising:
a clock radio setup application configured to support a clock radio user interface and to receive clock radio setup information through the clock radio user interface; and
a communication interface configured to communicate with a clock radio over a network in accordance with the clock radio setup information.

22. A computer as recited in claim 21, wherein the clock radio setup information comprises:
an alarm time;
an alarm sound; and
instructions for generating post-alarm audio data.

23. A computer as recited in claim 22, wherein the alarm time is selected from the group comprising:
a user-entered alarm time; and
an application-determined alarm time.

24. A computer as recited in claim 22, wherein the post-alarm audio data comprises an audio file playlist.

25. A computer as recited in claim 24, wherein the audio file playlist includes audio files selected from the group comprising:
audio files stored on the computer;
audio files from a peripheral device coupled to the computer;
audio files from an Internet content provider; and
audio files converted from text-based data.

26. A computer as recited in claim 25, wherein the text-based data is selected from the group comprising:
data from a text-based news source;
data from a text-based sports source;
data from a text-based weather source;
data from a text-based traffic source;
data from a text-based email source; and
data from a text-based calendaring source.

27. A computer as recited in claim 22, further comprising a text-to-speech converter configured to convert text-based data into post-alarm audio data.

28. A clock radio comprising:
an electronic time base to keep time;
a display device to display the time;
a control panel configured to receive local instructions, including local time set instructions and local alarm set instructions;
a communication interface configured to receive remote instructions, including remote time set instructions, remote alarm set instructions, and a remote audio data stream from a network device; and
a control module configured to set the time, to set an alarm, and to render the remote audio data stream in accordance with the local instructions and the remote instructions.

29. A clock radio as recited in claim 28, wherein the control panel comprises:
a forward button configured to skip forward to a next audio file in the remote audio data stream;
a back button configured to skip backward to a previous audio file in the remote audio data stream; and
an audio source button configured to skip between a plurality of audio data sources available from the network device.

30. A clock radio as recited in claim 29, wherein the control panel further comprises:
a snooze button to turn off the alarm temporarily;
a stop/resume button to alternately stop and resume a local function;
a local function button to alternately set the clock radio to different local functions; and
a volume button to set a volume level for the clock radio.

31. A clock radio as recited in claim 30, wherein the local functions are selected from the group comprising:
a time set function;
an alarm set function;
an AM radio station function;
an FM radio station function; and
an audio source function.

32. A clock radio as recited in claim 28, wherein the remote audio data stream comprises a preconfigured playlist of audio files.

33. A clock radio as recited in claim 32, wherein the audio files are selected from the group comprising:
an appointment audio file representing text-based calendar appointment information translated by a text-to-speech engine;
an email audio file representing a text-based email translated by a text-to-speech engine;
a news audio file representing a text-based news story translated by a text-to-speech engine;
a weather audio file representing a text-based weather report translated by a text-to-speech engine;
a business audio file representing a text-based business story translated by a text-to-speech engine;
a sports audio file representing a text-based sports story translated by a text-to-speech engine;
a traffic audio file representing a text-based traffic report translated by a text-to-speech engine; and
a personal music file from a collection of music files.
